# EUROPÄISCHE PATENTSCHRIFT

(11) **EP 1 510 684 B1**
(45) Veröffentlichungstag und Bekanntmachung des Hinweises auf die Patenterteilung: **18.08.2010**
(21) Anmeldenummer: 04019889.7
(22) Anmeldetag: 21.08.2004
(51) Int. Cl.: F02M 25/06, F01M 13/00, F16L 59/12, F16L 59/13, F16L 59/153

(54) **Vorrichtung zur Rückführung von Gasen und/oder Flüssigkeiten aus einem Kurbelgehäuse oder einem anderen Hohlraum eines Verbrennungsmotors in eine Ansaugleitung des Verbrennungsmotors**
Device for recirculating gases and/or liquids from the crankcase or from another cavity of an internal combustion engine into the intake manifold of the internal combustion engine
Dispositif pour recycler des gaz et/ou des liquides d'un carter de vilebrequin ou d'une autre cavité d'un moteur à combustion interne dans un collecteur d'amission du moteur à combustion interne

(30) Priorität: 28.08.2003 DE 10339622
(43) Veröffentlichungstag der Anmeldung: 02.03.2005
(73) Patentinhaber: Mündener Gummiwerk GmbH, 34346 Hann. Münden (DE)
(72) Erfinder: Möller, Thilo, 34346 Hann.Münden (DE); Dannenberg, Wolfgang, 34346 Hann.Münden (DE); Hicks, Patrick, 34346 Hann.Münden (DE)
(74) Vertreter: Finger, Karsten

(56) Entgegenhaltungen:
- DE-C1- 19 854 521
- GB-A- 2 158 153
- US-A- 4 205 642
- PATENT ABSTRACTS OF JAPAN Bd. 2003, Nr. 08, 6. August 2003 (2003-08-06) & JP 2003 120244 A (HONDA MOTOR CO LTD), 23. April 2003 (2003-04-23)
- PATENT ABSTRACTS OF JAPAN Bd. 015, Nr. 354 (M-1155), 6. September 1991 (1991-09-06) & JP 03 138408 A (KUBOTA CORP), 12. Juni 1991 (1991-06-12)

## Beschreibung

Die vorliegende Erfindung betrifft eine Vorrichtung zur Rückführung von Gasen und/oder Flüssigkeiten aus einem Kurbelgehäuse oder einem anderen Hohlraum eines Verbrennungsmotors in eine Ansaugleitung des Verbrennungsmotors gemäß dem Oberbegriff des Anspruches 1.

Moderne Verbrennungsmotoren sind mittlerweile derart optimiert, dass die im Kraftstoff vorhandene Energie zum größten Teil in Vortrieb umgewandelt wird und demzufolge, im Gegensatz zu früher, ein immer kleinerer Teil als Abwärme zur Verfügung steht. Dies hat zur Folge, dass die vom Verbrennungsmotor abgegebene Wärme zumindest bei extremen Außentemperaturen nicht mehr ausreicht, um sämtliche Nebenaggregate und Schläuche frostfrei zu halten. Gleichzeitig gibt es immer strengere Vorschriften, die die Emissionen einer Verbrennungskraftmaschine regeln, seit 2000 ist dies die Stufe EURO III und ab 2005 die Stufe EURO IV der Richtlinie 98/69EG. Dies hat zur Folge, dass die sogenannten BlowBy-Gase, die beim Verbrennungsprozess am Kolben vorbei in das Kurbelgehäuse gelangen, mittels einer Kurbelhausentlüftungsleitung zurück in die Ansaugleitung und somit erneut dem Verbrennungsprozess zugeführt werden müssen, wodurch ein geschlossener Kreislauf entsteht. Bei entsprechend niedrigen Temperaturen kann der Wasseranteil in den Gasen an der Innenwand des Kurbelhausentlüftungsschlauches kondensieren, wobei es unter weiter Temperatur senkenden Einflüssen im Schlauch zur Eisbildung und damit zur Querschnittsreduzierung kommen kann. Dies hätte zur Folge, dass nur noch eine eingeschränkte bzw. gar keine Entlüftung des Gehäuses erfolgt.

Zur Behebung der vorgenannten Probleme wird in der DE 198 54 521 C1 vorgeschlagen, den eigentlichen Leitungsschlauch durch einen den Leitungsschlauch umhüllenden Isolierschlauch thermisch zu isolieren, wobei der Isolierschlauch über Abstandsvorsprünge vom Leitungsschlauch beabstandet gehalten wird. Dabei sind an den jeweiligen Enden der Schläuche Rastmittel vorgesehen, so dass der Isolierschlauch am Leitungsschlauch einrastet und der zwischen dem Leitungsschlauch und Isolierschlauch gebildete Hohlraum hierdurch abgedichtet wird.

Aus der EP 1 207 279 A1 ist es bekannt, den Leitungsschlauch mit einem Überzug aus Isoliermaterial zu versehen, um eine bessere thermische Isolierung zu erreichen.

Sowohl bei dem doppelwandigen Schlauch mit Isolierspalt gemäß DE 198 54 521 C1, als auch bei dem Leitungsschlauch mit Isolierschicht gemäß EP 1 207 279 A1 entstehen hohe Kosten bei der Fertigung der jeweiligen Schläuche und vor allem sind diese Schläuche bedingt durch diese Konstruktion sehr dick. Letzteres führt einerseits zu Problemen beim Einbau in den in der Regel sehr engen Motorraum und zum anderen können diese Schläuche nicht mehr beliebig gekrümmt ausgeführt werden. Insbesondere im Bereich der Anschlussmuffen ist es sehr schwer, die derart dicken Schläuche an den anderen Komponenten des Motors unterzubringen. Aus diesem Grunde ist in der EP 1 207 279 A1 zwar vorgeschlagen, die Isolierschicht nur auf einen Teil des Leitungsschlauchs anzubringen, jedoch leidet hierunter die thermische Isoliereigenschaft und es kann dazu kommen, dass in dem nicht isolierten Teil dennoch Einfrierungen auftreten.

Davon ausgehend liegt der vorliegenden Erfindung die Aufgabe zu Grunde, eine Vorrichtung der eingangs genannten Art zu schaffen, die einerseits das Einfrieren des im Kurbelhausentlüftungsschlauches befindlichen Gases oder Wassers verhindert und andererseits einen so geringen Platzbedarf aufweist, dass sie auch in einem engen Motorraum integrierbar ist und außerdem in bekannter Weise gekrümmt ausgebildet werden kann.

Als technische Lösung dieser Aufgabe wird erfindungsgemäß eine Vorrichtung gemäß den Merkmalen des Anspruches 1 vorgeschlagen. Vorteilhafte Weiterbildungen dieser Vorrichtung sind den Unteransprüchen zu entnehmen.

Eine nach dieser technischen Lehre ausgebildete Vorrichtung hat den Vorteil, dass sich der Kurbelhausentlüftungsschlauch nunmehr im Windschatten befindet und somit nicht mehr ungeschützt dem Fahrtwind ausgesetzt ist.

Bei entsprechenden Versuchen hat sich herausgestellt, dass durch diesen Windabweiser selbst bei Außentemperaturen von minus 35 °C das im Kurbelhausentlüftungsschlauch befindliche Medium nicht einfriert, auch wenn sich das Fahrzeug auf einer Kurzstrecke befindet und der Motor nicht seine volle Betriebstemperatur erreicht.

Ein weiterer Vorteil besteht darin, dass der vom Kurbelhausentlüftungsschlauch vollkommen unabhängige Windabweiser den räumlichen Gegebenheiten im Motorraum in idealerweise angepasst werden kann, so dass hierdurch eine Änderung oder Abwandlung der anderen Aggregate im Motorraum nicht mehr erforderlich ist, wobei gleichzeitig ein Einfrieren des Gases oder Wassers im Kurbelhausentlüftungsschlauch verhindert wird.

Noch ein weiterer Vorteil besteht darin, dass die Fertigungskosten für einen solchen Windabweiser deutlich niedriger sind, als für die im Stand der Technik vorgeschlagenen Isolierschläuche oder Isoliermaterialien.

Dabei hat es sich als vorteilhaft erwiesen, den Windabweiser korrespondierend zur Kontur und zum Verlauf des Kurbelhausentlüftungsschlauches auszugestalten, damit der Kurbelhausentlüftungsschlauch direkt im Windschatten des Windabweisers liegt und nicht etwaige Verwirbelungen den Abschattungseffekt verringern.

In einer bevorzugten Ausführungsform hat es sich als vorteilhaft erwiesen, den Windabweiser derart auszubilden, dass er den Kurbelhausentlüftungsschlauch zu mehr als 180 °, maximal jedoch zu 240 ° umgreift. Hierdurch wird sichergestellt, dass der Fahrtwind wirklich vollständig am Kurbelhausentlüftungsschlauch vorbeigeleitet wird, ohne dass hinter dem Windabweiser auftretende Verwirbelungen den Kurbelhausentlüftungsschlauch erreichen und diesen auskühlen. Dabei hat es sich als vorteilhaft erwiesen, den Windabweiser den Kurbelhausentlüftungsschlauch um 220 ° umgreifen zu lassen, da hiermit noch eine einfache Montage möglich ist.

Zur Senkung der Fertigungskosten hat es sich bewährt, den Windabweiser direkt am Kurbelhausentlüftungsschlauch anzubringen, da hierdurch externe Befestigungselemente entbehrlich sind. Auch wird hierdurch gewährleistet, dass keine anderen Bauteile des Motors verändert werden müssen. Außerdem ist hierdurch ein leichter Austausch des Windabweisers möglich, falls dieser eines Tages gegen einen anderen ausgetauscht werden soll.

Zur Befestigung des Windabweiser am Kurbelhausentlüftungsschlauch hat es sich als kostengünstig herausgestellt, direkt am Kurbelhausentlüftungsschlauch eine Anzahl radial abstehender Nippel anzuvulkanisieren, die dann durch entsprechende, im Windabweiser vorbereitete Öffnungen hindurchreichen, um diesen am Kurbelhausentlüftungsschlauch zu halten. Derartige Nippel können in sehr kostengünstiger Weise in einem Arbeitsgang direkt mit dem Kurbelhausentlüftungsschlauch gefertigt werden, so dass hierdurch kaum mehr Kosten entstehen.

Die Nippel so auszubilden, dass diese den Windabweiser formschlüssig halten, hat den Vorteil, dass hierdurch keine weiteren Bauteile benötigt werden, was einerseits zu einer einfachen Montage und andererseits zu einer kostengünstigen Herstellung führt.

In einer besonders bevorzugten Ausführungsform sind am Kurbelhausentlüftungsschlauch einige, ebenfalls radial abstehende Abstandshalter anvulkanisiert, die den Windabweiser vorzugsweise in einem Abstand von 0,5 mm bis 10 mm, insbesondere in einem Abstand von 1 mm bis 3 mm halten. Durch diesen Mindestabstand wird gewährleistet, dass durch die Vibration des Verbrennungsmotors auftretende Schwingungen nicht zu einer Berührung von Kurbelhausentlüftungsschlauch und Windabweiser führen, so dass beide Bauteile, ohne sich gegenseitig zu beschädigen, nebeneinander existieren können.

In einer anderen, besonders bevorzugten Ausführungsform ist der Windabweiser an seiner dem Kurbelhausentlüftungsschlauch zugewandten Seite mit einer wärmereflektierenden Oberfläche versehen, bzw. ist zwischen Windabweiser und Kurbelhausentlüftungsschlauch eine entsprechend wärmereflektierende Reflektionsfolie vorgesehen. Beides hat den Vorteil, dass hierdurch die vom Kurbelhausentlüftungsschlauch ausgehende Wärmestrahlung wieder auf diesen zurückreflektiert wird, so dass somit ebenfalls einer Auskühlung des Kurbelhausentlüftungsschlauches entgegengewirkt wird.

Weitere Vorteile der erfindungsgemäßen Vorrichtung ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine explosionsartig dargestellte Perspektivansicht der erfindungsgemäßen Vorrichtung;
- Fig. 2: eine Schnittansicht der Vorrichtung gemäß Fig. 1, geschnitten entlang Linie II - II in Fig. 1;
- Fig. 3: eine Schnittansicht der Vorrichtung gemäß Fig. 1, geschnitten entlang Linie III - III in Fig. 1.

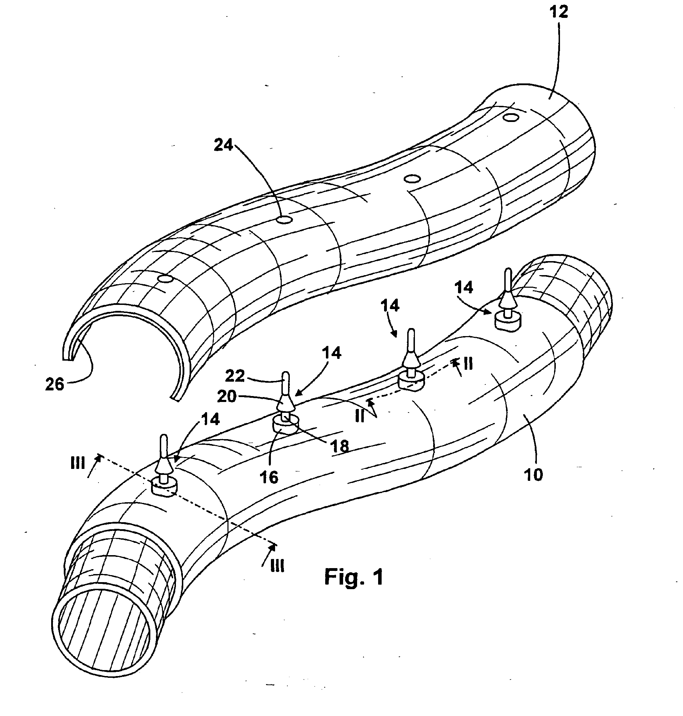

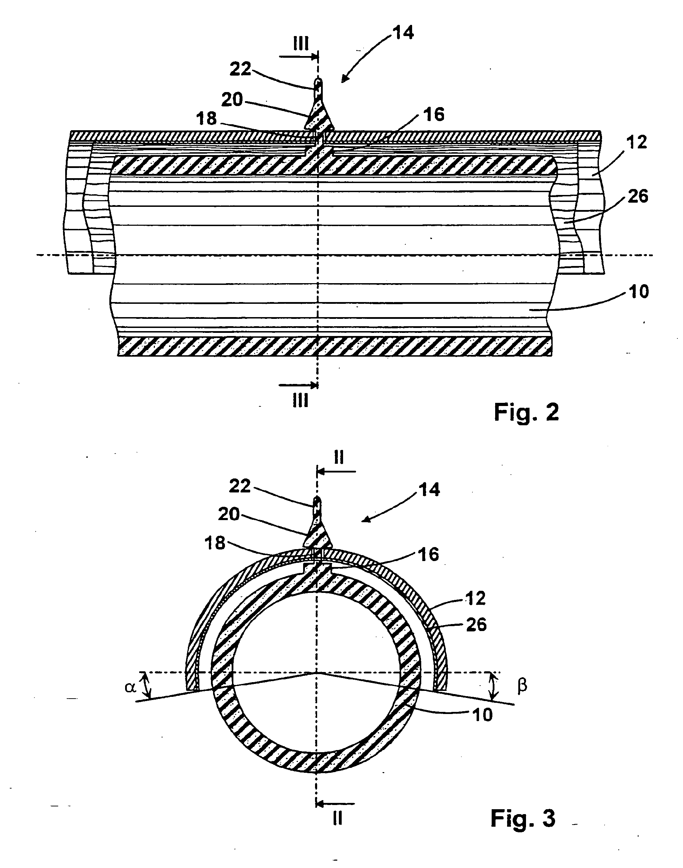

In den Figuren 1 bis 3 ist eine Ausführungsform einer erfindungsgemäßen Vorrichtung dargestellt. Diese Vorrichtung zur Rückführung von Gasen und/oder Flüssigkeiten aus einem Kurbelgehäuse oder einem anderen Hohlraum eines Verbrennungsmotors in eine Ansaugleitung des Verbrennungsmotors umfasst einen Kurbelhausentlüftungsschlauch 10 und einen Windabweiser 12. Dabei ist der Windabweiser 12 der äußeren Form des Kurbelhausentlüftungsschlauches 10 derart angepasst, dass der Kurbelhausentlüftungsschlauch 10 vom Windabweiser 12 teilweise umhüllt wird. Der Windabweiser 12 umgreift dabei den Kurbelhausentlüftungsschlauch um mehr als 180°, wie im Detail Fig. 3 zu entnehmen ist. Es versteht sich, dass der Windabweiser 12 an derjenigen Stelle am Kurbelhausentlüftungsschlauch 10 angebracht wird, aus der die Anströmung zu erwarten ist, so dass der Kurbelhausentlüftungsschlauch 10 im Windschatten des Windabweisers 12 angeordnet ist.

Am Kurbelhausentlüftungsschlauch 10 sind eine Anzahl Nippel 14 anvulkanisiert, an denen der Windabweiser 12 gehalten ist. Dieser Nippel umfasst unmittelbar am Kurbelhausentlüftungsschlauch 10 einen Abstandshalter 16, der je nach Auslegung zwischen 1 mm und 3 mm hoch ist. Des Weiteren umfasst der Nippel 14 einen Konus 18 und einen zwischen dem Konus 18 und dem Abstandshalter 16 angeordneten Hals 20. In Verlängerung des Konus 18 ist ein zylindrisches Griffelement 22 ausgebildet. Zur Montage des Windabweisers 12 am Kurbelhausentlüftungsschlauch 10 werden zunächst die Griffelemente 22 der diversen Nippel 14 in entsprechende Öffnungen 24 im Windabweiser 12 eingeführt. Danach wird das Griffelement 22 ergriffen, um den Nippel unter Kraftaufwendung durch die Öffnung 24 hindurchzuziehen. Sobald der Konus 18 die Öffnung 24 passiert hat, ist der Windabweiser 12 in der gewünschten Position. Hierbei wird der Windabweiser 12 durch den sich im Querschnitt erweiternden Konus 18 formschlüssig am Kurbelhausentlüftungsschlauch 10 gehalten, wobei der Windabweiser 12 durch die Abstandshalter 16 in einem definierten Abstand zum Kurbelhausentlüftungsschlauch 10 gehalten ist. Es versteht sich, dass der Kurbelhausentlüftungsschlauch 10 vorzugsweise aus Gummi, Elastomer oder einem entsprechenden flexiblen Kunststoff oder einem Verbundmaterial gebildet ist, während der Windabweiser 12 aus einem unflexiblen, starren Kunststoff oder Metall gebildet ist. Hierdurch kann die Luftströmung zuverlässig vom Kurbelhausentlüftungsschlauch 10 ferngehalten werden, ohne dass sich der Windabweiser 12 verformt und möglicherweise auf den Kurbelhausentlüftungsschlauch 10 zur Anlage kommt. Letzteres würde aufgrund des Kontaktes der Bauteile zueinander einerseits eine Kältebrücke bedeuten und andererseits aufgrund von Vibrationen zu störenden Geräuschen und/oder gar zu Beschädigungen führen, was natürlich jeweils unerwünscht ist.

An der Innenseite des Windabweisers 12 ist eine Wärmestrahlung reflektierende Reflektionsfolie 26 angebracht, die die vom Kurbelhausentlüftungsschlauch 10 abgestrahlte Wärme auf diesen wieder zurückreflektiert.

In einer anderen, hier nicht dargestellten Ausführungsform ist statt der Reflektionsfolie eine entsprechende Beschichtung auf der Innenseite des Windabweisers vorgesehen.

Wie insbesondere Fig. 3 zu entnehmen ist, reicht der Windabweiser 12 über die Mittellinie des Kurbehausentlüftungsschlauches 10 hinaus, wobei der Windabweiser 12 um die Winkel α und β über die Mittellinie überseht. In der in Fig. 3 dargestellten Ausführungsform beträgt der Winkel α = 10 ° und der Winkel β ebenfalls 10 °, so dass der Windabweiser 12 den Kurbelhausentlüftungsschlauch 10 um 200 ° umgreift. In einer anderen, hier nicht dargestellten Ausführungsform können die Winkel α und β auch anders gewählt werden, insbesondere können die Winkel auch unterschiedlich sein. jedoch sollte die Summe von α und β 60 ° nicht übersteigen, damit die Montage des Windabweisers 12 auf dem Kurbelhausentlüftungsschlauch 10 noch mit vertretbarem Aufwand möglich ist.

### Bezugszeichenliste:

- 10: Kurbelhausentlüftungsschlauch
- 12: Windabweiser
- 14: Nippel
- 16: Abstandshalter
- 18: Konus
- 20: Hals
- 22: Griffelement
- 24: Öffnung
- 26: Reflektionsfolie

## Patentansprüche

1. Vorrichtung zur Rückführung von Gasen und/oder Flüssigkeiten aus einem Kurbelgehäuse oder einem anderen Hohlraum eines Verbrennungsmotors in eine Ansaugleitung des Verbrennungsmotors umfassend einen Kurbelhausentlüftungsschlauch (10),
**gekennzeichnet durch**
einen Windabweiser (12) aus einem starren, unflexiblem Material, der den Kabelhausentlüftungsschlauch (10) nur teilweise umgreift, wobei der Kurbelhausentlüftungsschlauch (10) im Windschatten des Windabweisers - (12) angeordnet ist.

2. Vorrichtung nach Anspruch 1,
**dadurch gekennzeichnet,**
**dass** der Windabweiser (12) korrespondierend zur Kontur und zum Verlauf des Kurbelhausentlüftungsschlauches (10) ausgeformt ist.

3. Vorrichtung nach wenigstens einem der vorangehenden Ansprüche ,
**dadurch gekennzeichnet,**
**dass** der Windabweiser (12) den Kurbelhausentlüftungsschlauch (10) zwischen 180° und 240°, vorzugsweise 200° umgreift.

4. Vorrichtung nach wenigstens einem der vorangehenden Ansprüche,
**dadurch gekennzeichnet,**
**dass** der Windabweiser (12) zwischen 0,5 mm und 10 mm, vorzugsweise zwischen 1 mm und 3 mm vom Kurbelhausentlüftungsschlauch (10) beabstandet angeordnet ist.

5. Vorrichtung nach wenigstens einem der vorangehenden Ansprüche,
**dadurch gekennzeichnet,**
**dass** der Windabweiser (12) am Kurbelhausentlüftungsschlauch (10) gehalten ist.

6. Vorrichtung nach Anspruch 5,
**dadurch gekennzeichnet,**
**dass** am Kurbelhausentlüftungsschlauch (10) eine Anzahl radial abstehender Nippel (14) anvulkanisiert sind, die durch entsprechende Öffnungen (24) im Windabweiser (12) hindurchreichen, um den Windabweiser (12) am Kurbelhausentlüftungsschlauch (10) zu halten.

7. Vorrichtung nach Anspruch 6,
**dadurch gekennzeichnet,**
**dass** die Nippel (14) den Windabweiser (12) formschlüssig halten.

8. Vorrichtung nach wenigstens einem der vorangehenden Ansprüche,
**dadurch gekennzeichnet,**
**dass** am Kurbelhausentlüftungsschlauch (10) eine Anzahl radial abstehender Abstandshalter (16) anvulkanisiert sind, an denen der Windabweiser (12) zur Anlage kommt.

9. Vorrichtung nach wenigstens einem der vorangehenden Ansprüche,
**dadurch gekennzeichnet,**
**dass** der Windabweiser (12) an seiner dem Kurbelhausentlüftungsschlauch (10) zugewandten Seite eine Wärme reflektierende Oberfläche aufweist.

10. Vorrichtung nach wenigstens einem der vorangehenden Ansprüche,
**dadurch gekennzeichnet,**
**dass** zwischen Windabweiser (12) und Kurbelhausentlüftungsschlauch (10) eine Reflexionsfolie (26) vorgesehen ist.

11. Vorrichtung nach Anspruch 10,
**dadurch gekennzeichnet,**
**dass** die Reflexionsfolie (26) auf einer Innenseite des Windabweisers (12) angebracht ist.

## Claims

1. Apparatus for recirculating gases and/or liquids from a crankcase or another cavity of an internal combustion engine into an intake line of the internal combustion engine, comprising a crankcase ventilating hose (10), **characterized by** a wind deflector (12) which is made from a rigid, non-flexible material and reaches only partially around the crankcase ventilating hose (10), the crankcase ventilating hose (10) being arranged in the wind shadow of the wind deflector (12).

2. Apparatus according to Claim 1, **characterized in that** the wind deflector (12) is shaped so as to correspond to the contour and to the profile of the crankcase ventilating hose (10).

3. Apparatus according to at least one of the preceding claims, **characterized in that** the wind deflector (12) reaches around the crankcase ventilating hose (10) by between 180° and 240°, preferably by 200°.

4. Apparatus according to at least one of the preceding claims, **characterized in that** the wind deflector (12) is arranged spaced apart from the crankcase ventilating hose (10) by between 0.5 mm and 10 mm, preferably by between 1 mm and 3 mm.

5. Apparatus according to at least one of the preceding claims, **characterized in that** the wind deflector (12) is held on the crankcase ventilating hose (10).

6. Apparatus according to Claim 5, **characterized in that** a number of radially protruding nipples (14) are vulcanized on the crankcase ventilating hose (10), which nipples (14) reach through corresponding openings (24) in the wind deflector (12), in order to hold the wind deflector (12) on the crankcase ventilating hose (10).

7. Apparatus according to Claim 6, **characterized in that** the nipples (14) hold the wind deflector (12) in a positively locking manner.

8. Apparatus according to at least one of the preceding claims, **characterized in that** a number of radially protruding spacer elements (16) are vulcanized on the crankcase ventilating hose (10), against which spacer elements (16) the wind deflector (12) comes into contact.

9. Apparatus according to at least one of the preceding claims, **characterized in that**, on its side which faces the crankcase ventilating hose (10), the wind deflector (12) has a surface which reflects heat.

10. Apparatus according to at least one of the preceding claims, **characterized in that** a reflection foil (26) is provided between the wind deflector (12) and the crankcase ventilating hose (10).

11. Apparatus according to Claim 10, **characterized in that** the reflection foil (26) is attached to an inner side of the wind deflector (12).

## Revendications

1. Dispositif pour recycler des gaz et/ou des liquides d'un carter de vilebrequin ou d'une autre cavité d'un moteur à combustion interne dans un collecteur d'admission du moteur à combustion interne, comprenant un tuyau d'évacuation du carter de vilebrequin (10),
**caractérisé par**
un déflecteur d'air (12) en un matériau rigide non flexible, qui vient en prise seulement partiellement autour du tuyau d'évacuation du carter de vilebrequin (10), le tuyau d'évacuation du carter de vilebrequin (10) étant disposé dans une zone à l'abri du vent du déflecteur d'air (12).

2. Dispositif selon la revendication 1,
**caractérisé en ce que**
le déflecteur d'air (12) est formé d'une manière correspondant au contour et à l'allure du tuyau d'évacuation du carter de vilebrequin (10).

3. Dispositif selon au moins l'une quelconque des revendications précédentes,
**caractérisé en ce que**
le déflecteur d'air (12) vient en prise autour du tuyau d'évacuation du carter de vilebrequin (10) sur une plage comprise entre 180° et 240°, de préférence de 200°.

4. Dispositif selon au moins l'une quelconque des revendications précédentes,
**caractérisé en ce que**
le déflecteur d'air (12) est disposé à une distance comprise entre 0,5 mm et 10 mm, de préférence entre 1 mm et 3 mm, du tuyau d'évacuation du carter de vilebrequin (10).

5. Dispositif selon au moins l'une quelconque des revendications précédentes,
**caractérisé en ce que**
le déflecteur d'air (12) est maintenu sur le tuyau d'évacuation du carter de vilebrequin (10).

6. Dispositif selon la revendication 5,
**caractérisé en ce**
**qu'**un certain nombre d'ergots (14) saillant radialement sont vulcanisés sur le tuyau d'évacuation du carter de vilebrequin (10), lesquels traversent des ouvertures (24) correspondantes dans le déflecteur d'air (12), afin de maintenir le déflecteur d'air (12) sur le tuyau d'évacuation du carter de vilebrequin (10) .

7. Dispositif selon la revendication 6,
**caractérisé en ce que**
les ergots (14) retiennent le déflecteur d'air (12) par engagement par correspondance géométrique.

8. Dispositif selon au moins l'une quelconque des revendications précédentes,
**caractérisé en ce**
**qu'**un certain nombre d'éléments d'espacement (16) saillant radialement sont vulcanisés sur le tuyau d'évacuation du carter de vilebrequin (10), le déflecteur d'air (12) venant en appui contre ceux-ci.

9. Dispositif selon au moins l'une quelconque des revendications précédentes,
**caractérisé en ce que**
le déflecteur d'air (12) présente, sur son côté tourné vers le tuyau d'évacuation du carter de vilebrequin (10), une surface reflétant la chaleur.

10. Dispositif selon au moins l'une quelconque des revendications précédentes,
**caractérisé en ce que**
l'on prévoit entre le déflecteur d'air (12) et le tuyau d'évacuation du carter de vilebrequin (10), une feuille réfléchissante (26).

11. Dispositif selon la revendication 10,
**caractérisé en ce que**
la feuille réfléchissante (26) est appliquée sur un côté interne du déflecteur d'air (12).
